# EUROPÄISCHE PATENTSCHRIFT

(11) **EP 3 267 012 B1**
(45) Veröffentlichungstag und Bekanntmachung des Hinweises auf die Patenterteilung: **18.09.2019**
(21) Anmeldenummer: 17176565.4
(22) Anmeldetag: 19.06.2017
(51) Int. Cl.: F02B 75/04, F16K 15/14

(54) **RÜCKSCHLAGVENTIL FÜR EINEN PLEUEL FÜR EINE BRENNKRAFTMASCHINE MIT VARIABLER VERDICHTUNG**
CHECK VALVE FOR A CONNECTING ROD FOR A COMBUSTION ENGINE WITH VARIABLE COMPRESSION
CLAPET ANTI-RETOUR POUR UNE BIELLE DE MOTEUR À COMBUSTION INTERNE À COMPRESSION VARIABLE

(30) Priorität: 08.07.2016 DE 102016112573; 31.03.2017 DE 102017106987
(43) Veröffentlichungstag der Anmeldung: 10.01.2018
(73) Patentinhaber: ECO Holding 1 GmbH, 97828 Marktheidenfeld (DE)
(72) Erfinder: Schulze, Dietmar, 35516 Münzenberg (DE); Eckrich, Bastian, 97828 Marktheidenfeld (DE)

(56) Entgegenhaltungen:
- EP-A1- 2 466 081
- EP-A1- 2 821 619
- DE-A1-102010 018 200
- DE-A1-102010 019 004
- DE-A1-102010 021 399
- DE-A1-102012 112 481
- DE-B3-102005 013 085
- DE-B3-102014 103 400
- US-B1- 8 225 818

## Beschreibung

### Technisches Gebiet

Die Erfindung betrifft einen Pleuel für eine Brennkraftmaschine mit variabler Verdichtung mit wenigstens einer Hydraulikkammer.

### Stand der Technik

Bei Brennkraftmaschinen wirkt sich ein hohes Verdichtungsverhältnis positiv auf den Wirkungsgrad der Brennkraftmaschine aus. Unter Verdichtungsverhältnis wird im Allgemeinen das Verhältnis des gesamten Zylinderraumes vor der Verdichtung zum verbliebenen Zylinderraum nach der Verdichtung verstanden. Bei Brennkraftmaschinen mit Fremdzündung, insbesondere Ottomotoren, die ein festes Verdichtungsverhältnis aufweisen, darf das Verdichtungsverhältnis jedoch nur so hoch gewählt werden, dass bei Volllastbetrieb ein sogenanntes "Klopfen" der Brennkraftmaschine vermieden wird. Jedoch könnte für den weitaus häufiger auftretenden Teillastbereich der Brennkraftmaschine, also bei geringer Zylinderfüllung, das Verdichtungsverhältnis mit höheren Werten gewählt werden, ohne dass ein "Klopfen" auftreten würde. Der wichtige Teillastbereich einer Brennkraftmaschine kann verbessert werden, wenn das Verdichtungsverhältnis variabel einstellbar ist. Zur Verstellung des Verdichtungsverhältnisses sind beispielsweise Systeme mit variabler Pleuelstangenlänge bekannt, welche mit Hilfe von hydraulisch oder mechanisch betätigbaren Umschaltventilen eine Exzenter-Verstelleinrichtung eines Pleuels betätigen.

Ein derartiger Pleuel ist beispielsweise aus der gattungsgemäßen DE 10 2012 112 481 A1 bekannt und umfasst eine Exzenter-Verstelleinrichtung zur Verstellung einer effektiven Pleuelstangenlänge, wobei die Exzenter-Verstelleinrichtung einen mit einem Exzenterhebel zusammenwirkenden Exzenter aufweist, sowie zwei Kolben, welche jeweils in einer Hydraulikkammer verschiebbar geführt sind und in welchen an dem Exzenterhebel angreifende Exzenterstangen der Exzenter-Verstelleinrichtung gelagert sind. Ein Verstellweg der Exzenter-Verstelleinrichtung ist mittels eines Umschaltventils verstellbar. Durch die Änderung des Verstellwegs wird die effektive Pleuelstangenlänge geändert. Damit kann die Verdichtung einer Brennkraftmaschine gesteuert werden. Rückschlagventile im Pleuel verhindern jeweils einen Rückfluss von Hydraulikfluid aus den Hydraulikkammern in die Lagerschale bzw. einen Versorgungsanschluss.

Bandförmige Rückschlagventile sind grundsätzlich bekannt. Aus der DE 10 2010 021 399 A1 ist beispielhaft ein hydraulisches Ventil mit bandförmigen Rückschlagventilen zu entnehmen.

### Offenbarung der Erfindung

Eine Aufgabe der Erfindung ist es, einen Pleuel für eine Brennkraftmaschine mit variabler Verdichtung zu schaffen, welches eine große Zuverlässigkeit, eine hohe Lebensdauer aufweist und gleichzeitig eine vereinfachte und damit kostengünstige Herstellung und Montag erlaubt.

Günstige Ausgestaltungen und Vorteile der Erfindung ergeben sich aus den weiteren Ansprüchen, der Beschreibung und der Zeichnung.

Es wird ein Pleuel für eine Brennkraftmaschine mit variabler Verdichtung mit wenigstens einer Hydraulikkammer vorgeschlagen, wobei die Hydraulikkammer mittels eines Rückschlagventils mit einer Lagerschale bzw. einem Versorgungsanschluss des Pleuels bzw. einer weiteren Hydraulikkammer verbindbar ist. Der Pleuel kann vorteilhaft als längenverstellbarer Pleuel ausgeführt sein.
Das Rückschlagventil weist einen Ventilkörper mit einem Fluidpfad auf, welcher mittels eines Schließelements öffenbar und schließbar ist. Erfindungsgemäß ist das Schließelement als nach radial außen öffenbares Ringband vorgesehen.

Das Pleuel für eine Brennkraftmaschine mit variabler Verdichtung eines Kraftfahrzeugs ist beispielhaft in der DE 10 2013 107 127 A1 beschrieben. Das Rückschlagventil kann jedoch auch in anderen Ausführungsformen eines Pleuels für eine Brennkraftmaschine mit variabler Verdichtung eingesetzt werden, welche wenigstens eine Hydraulikkammer aufweisen, die mittels des Rückschlagventils mit einer Lagerschale bzw. einem Versorgungsanschluss (z.B. einem Tank) des Pleuels verbindbar ist, wobei das Rückschlagventil einen Rückfluss zur Lagerschale bzw. zum Versorgungsanschluss verhindert. Das Rückschlagventil kann dabei direkt unterhalb der Hydraulikkammer oder in einer Querbohrung des Pleuels angeordnet vorgesehen sein. Das Rückschlagventil ist einfach und kostengünstig aufgebaut. Insbesondere können Funktionsnachteile vermieden werden.

Das erfindungsgemäße Rückschlagventil weist einen Ventilkörper auf, durch den ein Fluidpfad eines Hydraulikfluids verläuft, welches zwischen wenigstens einer Hydraulikkammer und einer Lagerschale bzw. einem Versorgungsanschluss des Pleuels bzw. einer weiteren Hydraulikkammer verläuft. Der Ventilkörper weist Öffnungen in Form von Bohrungen oder Nuten auf, welche mit einem Schließelement verschlossen werden können. Das Schließelement ist erfindungsgemäß als Ringband, beispielsweise als elastisches Blechband vorgesehen, welches auf seinem Umfang an einer Stelle geschlitzt sein kann, so dass es nach radial außen aufgeweitet werden kann. Ein solches elastisches Blechband weist genügend Eigenspannung auf, um eine Öffnung, vorteilhafterweise auf einem Umfang eines zylindrischen Ventilkörpers, durch die Federspannung zu verschließen. Das Schließelement kann dann durch einen genügend hohen Hydraulikdruck in einer Durchgangsrichtung den Fluidpfad freigeben, während in Gegenrichtung der Fluidpfad durch Hydraulikdruck auf das Schließelement gesperrt wird. Auf diese Weise kann die Funktion eines Rückschlagventils einfach und kostengünstig umgesetzt werden. Es werden keine zusätzlichen Komponenten benötigt, da Schließelement und Federelement in einem Bauteil realisiert sind. Durch Wahl eines geeigneten elastischen Blechbands als Ringband kann der nötige Druck zum Öffnen des Schließelements eingestellt werden, beispielsweise über die Blechstärke. Auch ist ein solches Ringband als Schließelement sehr platzsparend, so dass eine kompakte Bauweise für das Rückschlagventil zu realisieren ist. Ein solches Rückschlagventil ist robust in seiner Funktion, weist hohe Zuverlässigkeit und Lebensdauer auf. Durch die kompakte Anordnung des Schließelements ist es einfach zu montieren und kann in einen Pleuel auf einfache Weise integriert werden.

Das Rückschlagventil kann vorteilhaft in einem längenverstellbaren Pleuel eingesetzt werden. Das Ringband als Schließelement kann in einer nach radial außen öffnenden Funktion des Rückschlagventils angeordnet sein. Dabei ist es vorteilhaft, wenn bei der nach radial außen öffnenden Bauweise die Enden des Ringbandes in der Einbaulage am Umfang des Ventilkörpers zueinander weisend, d.h. nicht überlappend, angeordnet sind. , Das Rückschlagventil kann vorteilhaft in den Pleuel eingepresst oder auch eingeschraubt werden. Auf beide Arten ist eine Montage des Rückschlagventils im Pleuel günstig umzusetzen. Der Einbauort im Pleuel kann beispielsweise direkt an einer Hydraulikkammer des Pleuels liegen oder auch in einer Querbohrung im Pleuelkörper mit entsprechenden Hydraulikfluidleitungen für das Hydraulikfluid sein.

Gemäß einem ersten Aspekt der Erfindung ist das Ringband nach radial außen öffenbar vorgesehen und Enden des Ringbandes sind in der Einbaulage am Umfang des Ventilkörpers zueinander weisend angeordnet, d.h. die Enden überlappen nicht. Durch entsprechenden Hydraulikdruck des Hydraulikfluids in dem im Inneren des Ventilkörpers verlaufenden Fluidpfad kann das Ringband nach außen aufgeweitet werden und so eine Öffnung im Ventilkörper freigeben, so dass Hydraulikfluid nach außen strömen kann. Herrscht im Fluidpfad ein niedrigerer Druck als die Summe aus dem Hydraulikdruck im Äußeren des Rückschlagventils und dem Federdruck des vorgespannten Ringbandes, so bleibt das Schließelement geschlossen und das Rückschlagventil sperrt.
Insbesondere bei einem nach radial außen öffnenden Ringband können die Enden voneinander beabstandet als offener Stoß ausgebildet sein, so dass, wenn sich das Ringband aufweitet und bei abnehmendem Hydraulikdruck wieder in die Einbaulage zurückgeht, die beiden Enden nicht aneinanderstoßen, was sonst zu einer Undichtigkeit des Rückschlagventils führen könnte. Auf diese Weise kann die Funktion des Öffnens und Schließens durch das Ringband zuverlässig ausgeführt werden.

Zur Lagesicherung des Ringbandes ist ein Bolzen vorgesehen. An der Stelle des offenen Stoßes des Ringbandes ist der Bolzen in radialer Richtung angeordnet, welcher ein Rotieren des Ringbandes in Umfangsrichtung verhindert. Auf diese Weise kann die Funktion des Öffnens und Schließens durch das Ringband gewährleistet werden, da das Ringband die Öffnungen des Ventilkörpers zuverlässig überdeckt und seine Position nicht ändert.

Gemäß einer vorteilhaften Ausgestaltung können radial nach außen gerichtete, insbesondere umlaufende, Vorsprünge in einer Längsrichtung zu beiden Seiten des Schließelements zur Begrenzung einer axialen Bewegung des Schließelements vorgesehen sein. Die Vorsprünge können vorteilhaft bei aufgeweitetem Ringband verhindern, dass sich das Ringband axial in der Längsrichtung des Ventilkörpers verschieben kann. Das Ringband kann so auch zweckmäßig in einer auf dem Außenumfang des Ventilkörpers verlaufenden Nut angeordnet sein.

Gemäß einer vorteilhaften Ausgestaltung kann der Fluidpfad zwei Teilpfade aufweisen, welche mit einem oder mehreren Schließelementen öffenbar und schließbar sind. Der Fluidpfad, welcher aus einer Versorgungsleitung mit Hydraulikfluid gespeist wird, kann beispielsweise im Inneren des Ventilkörpers über zwei Öffnungen des Ventilkörpers auf zwei Teilpfade aufgeteilt werden, welche mit zwei getrennten Hydraulikkammern im Pleuel in hydraulischer Verbindung stehen. Diese zwei Teilpfade können mit einem gemeinsamen Schließelement oder mit mehreren Schließelementen versehen sein, um so gemeinsam oder getrennt geöffnet und geschlossen zu werden.

Gemäß einer vorteilhaften Ausgestaltung können die Schließelemente unabhängig voneinander öffenbar und schließbar sein. Insbesondere, wenn die zwei Teilpfade des Fluidpfads mit zwei getrennten Hydraulikkammern im Pleuel in hydraulischer Verbindung stehen, ist es vorteilhaft, wenn die beiden Teilpfade durch zwei Schließelemente unabhängig voneinander geöffnet und geschlossen werden können.

Das Rückschlagventil weist einen Ventilkörper mit einem Fluidpfad auf, welcher mittels eines Schließelements öffenbar und schließbar ist. Das Schließelement ist als Ringband vorgesehen. Das Ringband als Schließelement kann in einer nach radial außen öffnenden Funktion des Rückschlagventils angeordnet sein. Dabei ist es vorteilhaft, wenn bei der nach radial außen öffnenden Bauweise die Enden des Ringbandes in der Einbaulage am Umfang des Ventilkörpers zueinander weisend, d.h. nicht überlappend, angeordnet sind. Bei der Ausführung mit offenem Stoß der Enden des Ringbandes kann zur Lagesicherung des Ringbandes ein radial eingesetzter Bolzen angeordnet sein.

Gemäß einer vorteilhaften Ausgestaltung kann das Rückschlagventil in einen Pleuelkörper des Pleuels eingeschraubt oder eingepresst vorgesehen sein. Auf beide Arten ist eine Montage des Rückschlagventils im Pleuel günstig umzusetzen. Die Abdichtung des Rückschlagventils im Pleuelkörper lässt sich durch beide Montagearten zweckmäßig über Dichtungen oder allein durch das Einpressen erreichen.

Gemäß einer vorteilhaften Ausgestaltung kann das Rückschlagventil unterhalb der Hydraulikkammer und/oder in einer Querbohrung des Pleuels angeordnet vorgesehen sein. So kann das Rückschlagventil direkt in der unmittelbaren Nähe der Hydraulikkammer mit direkter Verbindung zur Hydraulikkammer eingesetzt werden. Alternativ ist jedoch auch möglich, das Rückschlagventil in einer Querbohrung des Pleuelkörpers anzuordnen, welche über entsprechende hydraulische Hydraulikfluidleitungen mit der Lagerschale bzw. dem Versorgungsanschluss des Pleuels sowie den Hydraulikkammern verbunden ist.

Gemäß einer vorteilhaften Ausgestaltung kann bei einem Pleuel mit zwei Hydraulikkammern jeweils ein Rückschlagventil einer Hydraulikkammer zugeordnet sein. Günstig kann für jede Hydraulikkammer ein eigens zugeordnetes Rückschlagventil eingesetzt werden, so dass die Funktion des Rückschlagventils in einem hydraulischen Zulauf und/oder Ablauf der Hydraulikkammer unabhängig von dem Hydraulikdruck in der anderen Hydraulikkammer gewährleistet werden kann.

Gemäß einer vorteilhaften Ausgestaltung kann bei einem Pleuel mit zwei Hydraulikkammern auch ein einziges Rückschlagventil für beide Hydraulikkammern vorgesehen sein, wobei der Fluidpfad im Ventilkörper Teilpfade aufweist, welche jeweils einer Hydraulikkammer zugeordnet sind. Die Rückschlagfunktion kann so auch günstig für jeden Teilpfad getrennt gewährleistet werden, wenn unabhängige Schließelemente für jeden Teilpfad verwendet werden. Mit einem einzigen Rückschlagventil lässt sich so eine besonders platzsparende Bauweise des Pleuels verwirklichen.

### Kurze Beschreibung der Zeichnungen

Weitere Vorteile ergeben sich aus der folgenden Zeichnungsbeschreibung. In den Zeichnungen sind Ausführungsbeispiele der Erfindung schematisch dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: eine räumliche Darstellung eines ersten erfindungsgemäßen Ausführungsbeispiels eines Rückschlagventils;
- Fig. 2: eine Seitenansicht des Rückschlagventils gemäß Fig. 1;
- Fig. 3: einen ersten Längsschnitt A-A des Rückschlagventils gemäß Fig. 1;
- Fig. 4: einen Querschnitt B-B des Rückschlagventils gemäß Fig. 1;
- Fig. 5: einen zweiten Längsschnitt C-C des Rückschlagventils gemäß Fig. 1;
- Fig. 6: eine räumliche Darstellung eines zweiten erfindungsgemäßen Ausführungsbeispiels eines Rückschlagventils;
- Fig. 7: eine Seitenansicht des Rückschlagventils gemäß Fig. 6;
- Fig. 8: einen Längsschnitt A-A des Rückschlagventils gemäß Fig. 6;
- Fig. 9: einen Querschnitt B-B des Rückschlagventils gemäß Fig. 6;
- Fig. 10: eine räumliche Darstellung eines dritten Ausführungsbeispiels eines Rückschlagventils;
- Fig. 11: eine Seitenansicht des Rückschlagventils gemäß Fig. 10;
- Fig. 12: einen ersten Längsschnitt A-A des Rückschlagventils gemäß Fig. 10;
- Fig. 13: einen zweiten Längsschnitt B-B des Rückschlagventils gemäß Fig. 10;
- Fig. 14: einen Querschnitt C-C des Rückschlagventils gemäß Fig. 10;
- Fig. 15: eine räumliche Darstellung eines vierten Ausführungsbeispiels eines Rückschlagventils;
- Fig. 16: eine Draufsicht des Rückschlagventils gemäß Fig. 15;
- Fig. 17: einen ersten Längsschnitt A-A des Rückschlagventils gemäß Fig. 15;
- Fig. 18: einen ersten Querschnitt B-B des Rückschlagventils gemäß Fig. 15;
- Fig. 19: einen zweiten Querschnitt C-C des Rückschlagventils gemäß Fig. 15;
- Fig. 20: einen dritten Querschnitt D-D des Rückschlagventils gemäß Fig. 15;
- Fig. 21: eine Seitenansicht des Rückschlagventils gemäß Fig. 15;
- Fig. 22: einen zweiten Längsschnitt E-E des Rückschlagventils gemäß Fig. 15; und
- Fig. 23: einen Pleuel nach einem Ausführungsbeispiel der Erfindung in einer Vorderansicht.

### Ausführungsformen der Erfindung

In den Figuren sind gleiche oder gleichartige Komponenten mit Bezugszeichen beziffert, welche in den verschiedenen Ausführungsbeispielen jeweils um 100 erhöht sind. Auf eine wiederholte Beschreibung wird daher verzichtet. Die Figuren zeigen lediglich Beispiele und sind nicht beschränkend zu verstehen.

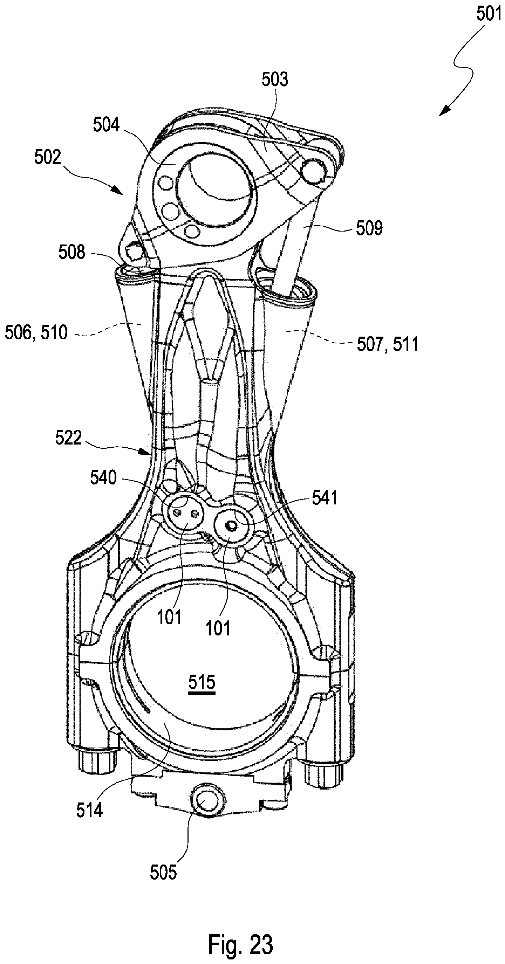

Die nachfolgend beschriebenen Rückschlagventile finden vorteilhafterweise in einem Pleuel für eine Brennkraftmaschine mit variabler Verdichtung eines Kraftfahrzeugs Anwendung, welches beispielhaft in der DE 10 2013 107 127 A1 beschrieben ist. Die Rückschlagventile können jedoch in anderen Ausführungsformen eines Pleuels 501 für eine Brennkraftmaschine mit variabler Verdichtung eingesetzt werden, wie beispielsweise in Fig. 23 dargestellt, welche wenigstens eine Hydraulikkammer 510, 511 aufweisen, die mittels des Rückschlagventils 101 mit einer Lagerschale 514 bzw. einem Versorgungsanschluss P (z.B. einem Tank) des Pleuels 501 verbindbar ist, wobei das Rückschlagventil 101 einen Rückfluss zur Lagerschale 514 bzw. zum Versorgungsanschluss P verhindert. Das Rückschlagventil 101 kann dabei direkt unterhalb der Hydraulikkammer 510, 511 oder in einer Querbohrung 540, 541 des Pleuels 501 angeordnet vorgesehen sein.

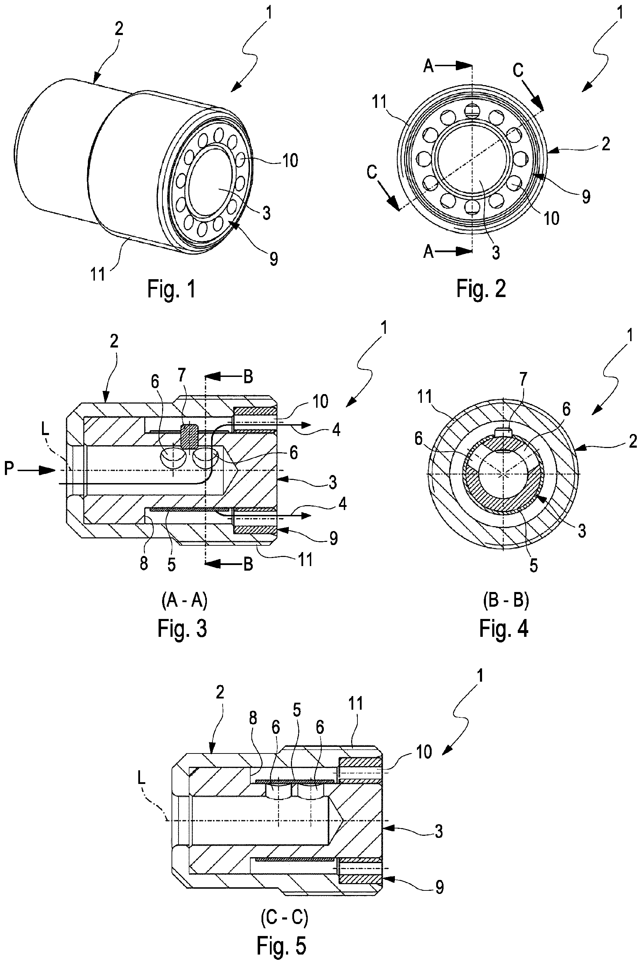

Den Fig. 1 bis 5 sind verschiedene Ansichten und Schnitte eines ersten Ausführungsbeispiels eines erfindungsgemäßen Rückschlagventils 1 zu entnehmen. Das Rückschlagventil 1 weist einen in einem Ventilgehäuse 2 angeordneten Ventilkörper 3 mit einem Fluidpfad 4 auf, welcher durch Pfeile in dem Längsschnitt A-A gemäß Fig. 3 angedeutet ist. Der Fluidpfad 4 ist mittels eines Schließelements 5 öffenbar und schließbar. Wie ersichtlich ist das Schließelement 5 als Ringband vorgesehen, welches ein oder mehrere Öffnungen 6 im Ventilkörper 3 verschließt. Das Ringband kann beispielsweise als elastisches Blechband realisiert sein. Bei einem durch das Ringband vorgegebenen Druck öffnet sich das Ringband nach radial außen und erlaubt einen Fluidstrom in die nicht gezeigte Hydraulikkammer des Pleuels.

Enden des Ringbandes überlappen sich in dem ersten Ausführungsbeispiel nicht. Daher ist zur Lagesicherung des Ringbandes ein Bolzen 7 vorgesehen, welcher zwischen den beiden Enden des Ringstoßes angeordnet ist, so dass ein Verdrehen des Ringbandes zuverlässig ausgeschlossen werden kann. Eine axiale Lagesicherung des Ringbandes erfolgt durch einen umlaufenden Absatz 8 des Ventilkörpers 3 und einen Ventildeckel 9, dessen Durchgangsbohrungen 10 einen Teil des Fluidpfads 4 bilden und welcher in das Ventilgehäuse 2 vorzugsweise eingepresst vorgesehen ist.

Das Ventilgehäuse 2 kann mittels eines Gewindes 11 in einen Pleuelkörper des Pleuels eingeschraubt werden.

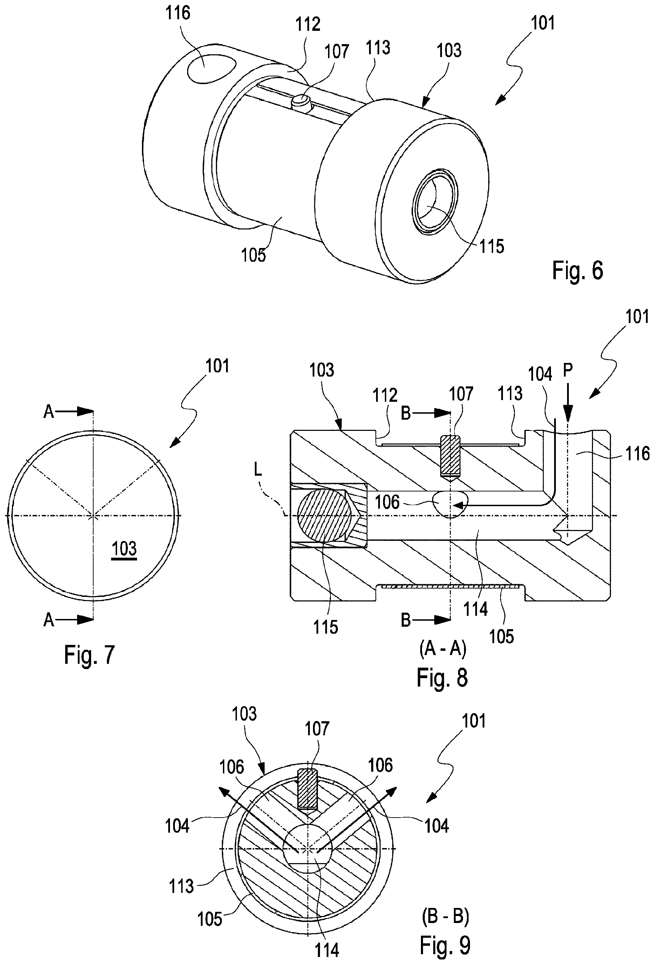

Ein zweites Ausführungsbeispiel eines erfindungsgemäßen Rückschlagventils 101 ist aus den Fig. 6 bis 9 zu entnehmen. Das Rückschlagventil 101 weist lediglich einen Ventilkörper 103 auf, welcher in den Pleuelkörper des Pleuels eingepresst werden kann. Ein Schließelement 105 ist ebenfalls als radial nach außen öffnendes Ringband vorgesehen, welches in seiner Lage durch einen zwischen den offenen Stoßenden des Ringbandes angeordneten Bolzen 107 gesichert ist und damit Öffnungen 106 des Ventilkörpers 103 zuverlässig verschließt. Die axiale Sicherung des Ringbandes gegen ein Verschieben in Längsrichtung L erfolgt durch radial nach außen gerichtete umlaufende Vorsprünge 112 und 113 des Ventilkörpers 103. Der Fluidpfad 104 ist zum Teil durch eine axiale Sacklochbohrung 114 ausgebildet, welche durch einen Kugelstopfen 115 dicht verschlossen ist. Wie insbesondere aus den Fig. 8 und 9 ersichtlich ist, umfasst der Fluidpfad 104 eine Querbohrung 116, welche im Pleuel mit dem Versorgungsanschluss P verbunden ist, sowie die als Querbohrungen ausgebildeten Öffnungen 106, welche in die Sacklochbohrung 114 münden.

Zur axialen Lagesicherung könnte der Bolzen 7 bzw. 107 auch eine Bohrung des Ringbandes durchragen.

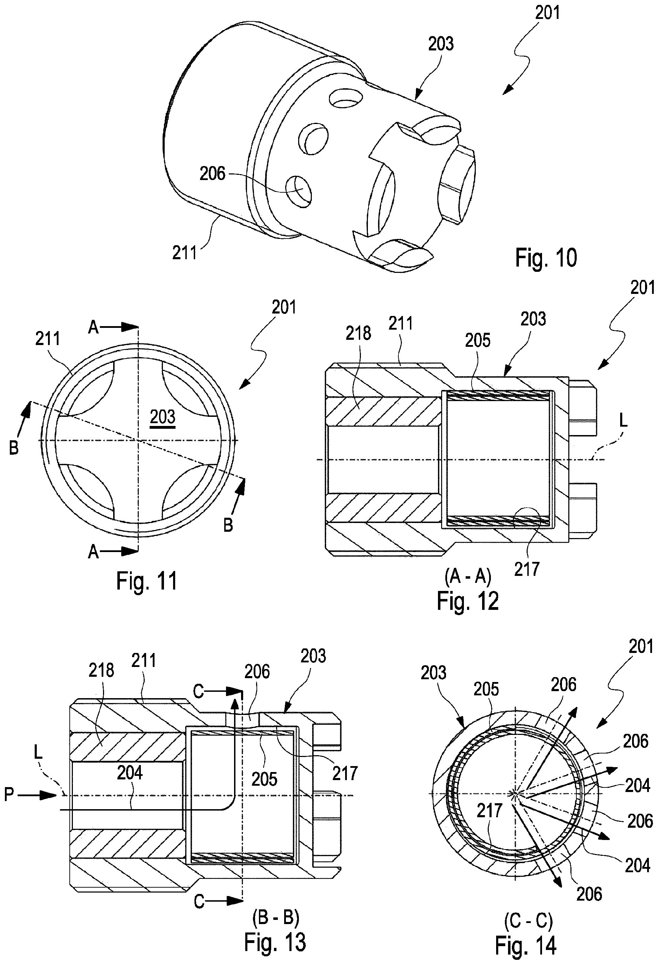

Das in den Fig. 10 bis 14 dargestellte dritte Ausführungsbeispiel eines erfindungsgemäßen Rückschlagventils 201 weist im Unterschied zu den ersten beiden Ausführungsbeispielen ein Ringband als Schließelement 205 auf, welches nach radial innen öffenbar ist und dessen Enden sich in der Einbaulage überlappen. Damit verschließt das Ringband in der Einbaulage die radial nach außen gerichteten Öffnungen 206 des Ventilkörpers 203. Das Ringband ist in einer stufenförmigen Ausnehmung 217 des Ventilkörpers 203 angeordnet, welches mittels eines Gewindes 211 in den Pleuelkörper eingeschraubt vorgesehen ist. Ein in die Ausnehmung 217 eingepresstes radial nach innen gerichtetes umlaufendes Sicherungselement 218 verhindert ein Herausrutschen des Ringbandes.

Der Fluidpfad 204 verläuft durch eine zentrale Bohrung des Sicherungselements 218 ins Innere des Ventilkörpers 203 und des Ringbandes. Das Hydraulikfluid kann so bei Öffnen des Ringbands nach radial innen gemäß dem Fluidpfad 204 durch die Öffnungen 206 nach außen zu den Hydraulikkammern eines Pleuels strömen.

Die vorstehend beschriebenen Rückschlagventile 1, 101, 201 sind jeweils einer Hydraulikkammer eines Pleuels zugeordnet.

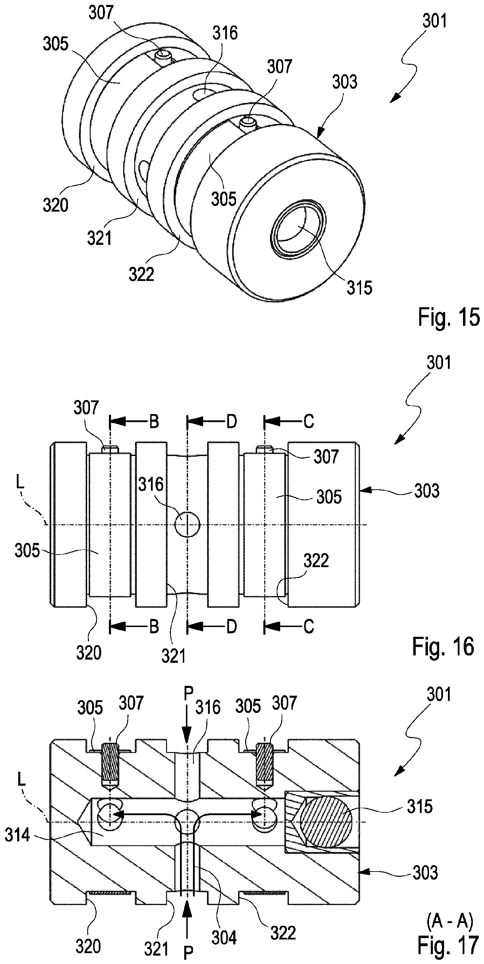

Gemäß dem in den Fig. 15 bis 22 dargestellten vierten Ausführungsbeispiel ist dagegen ein einziges Rückschlagventil 301 für beide Hydraulikkammern eines Pleuels vorgesehen. Hierzu weist ein Ventilkörper 303 drei Ringnuten 320, 321 und 322 auf. In den Ringnuten 320 und 322 ist jeweils ein nach radial außen öffenbares Schließelement 305 in Form eines Ringbandes angeordnet, welches mit den Hydraulikkammern verbundene Öffnungen 306 verschließt. Das Ringband ist jeweils mit einem Bolzen 307 gegen ein Verdrehen in Umlaufsrichtung gesichert.

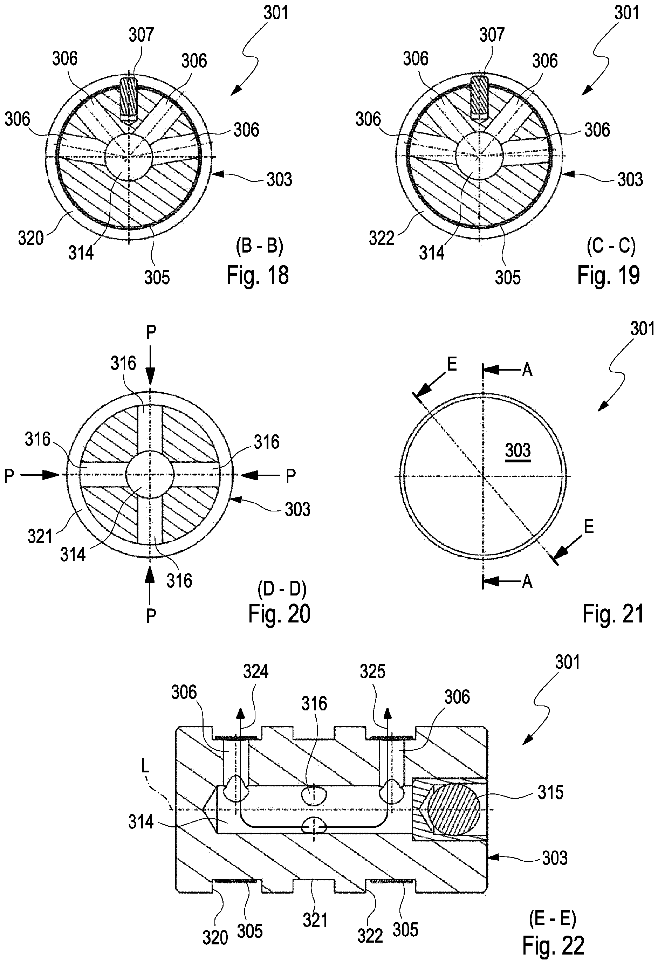

Es sind jeweils mehrere, in den Ringnuten 320 und 322 angeordnete Öffnungen 306 mit einer Hydraulikkammer verbindbar. Ein Fluidpfad 304 ist zum Teil durch eine axiale Sacklochbohrung 314 ausgebildet, welche durch einen Kugelstopfen 315 dicht verschlossen ist. Wie insbesondere aus den Fig. 17 und 20 ersichtlich ist, umfasst der Fluidpfad 304 in der Ringnut 321 angeordnete, mit dem Versorgungsanschluss P verbundene Querbohrungen 316 sowie die als Querbohrungen ausgebildeten Öffnungen 306 in den Ringnuten 320, 322, welche als Teilpfade 324, 325 in die Sacklochbohrung 314 münden. Durch die Anordnung der beiden getrennten Schließelemente 305 in den Nuten 320 und 322 des Ventilkörpers 303 können die beiden Teilpfade 324, 325 unabhängig voneinander geöffnet und geschlossen werden.

Fig. 23 zeigt eine Vorderansicht eines erfindungsgemäßen Pleuels 501 für eine Brennkraftmaschine mit variabler Verdichtung eines Kraftfahrzeugs mit Rückschlagventilen 101 in schematischer Darstellung in einer Stellung mit hoher Verdichtung, als Stellung ε-high bezeichnet. Der Pleuel 501 umfasst eine Exzenter-Verstelleinrichtung 502 zur Verstellung einer effektiven Pleuelstangenlänge. Die Exzenter-Verstelleinrichtung 502 weist einen mit einem ein- oder mehrteiligen Exzenterhebel 503 zusammenwirkenden Exzenter 504 auf. Dabei ist ein Verstellweg der Exzenter-Verstelleinrichtung 502 mittels eines Umschaltventils 505 verstellbar.

Eine Verdrehung der verstellbaren Exzenter-Verstelleinrichtung 502 wird durch Einwirken von Massenkräften und Gaskräften der Brennkraftmaschine initiiert, die bei einem Arbeitstakt der Brennkraftmaschine auf die Exzenter-Verstelleinrichtung 502 wirken. Während eines Arbeitstaktes verändern sich die Wirkungsrichtungen der auf die Exzenter-Verstelleinrichtung 502 wirkenden Kräfte kontinuierlich. Die Drehbewegung oder Verstellbewegung wird durch einen mit Hydraulikfluid, insbesondere mit Motoröl, beaufschlagten, im Pleuel 501 integrierten Kolben 506, 507 unterstützt, bzw. die Kolben 506, 507 verhindern ein Rückstellen der Exzenter-Verstelleinrichtung 502 aufgrund variierender Kraftwirkungsrichtungen der auf die Exzenter-Verstelleinrichtung 502 wirkenden Kräfte.

Die Kolben 506, 507 sind mittels Exzenterstangen 508, 509 beidseitig mit dem Exzenterhebel 503 der Exzenter-Verstelleinrichtung 502 wirkverbunden. Die Kolben 506, 507 sind in Hydraulikkammern 510, 511 verschiebbar angeordnet und über Hydraulikfluidleitungen von der Lagerschale 514 des Hublagerauges 515 aus mit Hydraulikfluid über Rückschlagventile 101 beaufschlagt. Diese verhindern dabei ein Rückfließen des Hydraulikfluids aus den Hydraulikkammern 510, 511 zurück in die Hydraulikfluidleitungen in die Lagerschale 514 des Hublagerauges 515 bzw. einen Tank und ermöglichen ein Nachsaugen von Hydraulikfluid in die Hydraulikkammern 510, 511. Die Hydraulikkammern 510, 511 sind mit weiteren Hydraulikfluidleitungen verbunden, welche mit dem Umschaltventil 505 zusammenwirken. Das Umschaltventil 505 ist über zwei Hydraulikfluidleitungen ebenfalls mit der Lagerschale 514 verbunden.

Die beiden Rückschlagventile 101 sind jeweils in dem Pleuelkörper 522 in den Querbohrungen 540, 541 angeordnet und über Hydraulikfluidleitungen mit der Lagerschale 514 verbunden, wobei die Rückschlagventile 101 eingepresst oder eingeschraubt sein können.

Alternativ könnten Rückschlagventil 101 unterhalb der Hydraulikkammern 510, 511 angeordnet vorgesehen sein.

Bei dem in Fig. 23 dargestellten Ausführungsbeispiel ist einer Hydraulikkammer 510, 511 jeweils ein Rückschlagventil 101 zugeordnet. Alternativ könnte jedoch auch nur ein einziges Rückschlagventil 301 (siehe Fig. 15 bis 22) für beide Hydraulikkammern 510, 511 vorgesehen sein, wobei der Fluidpfad 304 in diesem Fall im Ventilkörper 303 Teilpfade 324, 325 aufweist, welche jeweils über Hydraulikfluidleitungen mit einer Hydraulikkammer 510, 511 verbunden sind.

Eine weitere, nicht dargestellte Ausführungsform eines erfindungsgemäßen Pleuels mit zwei Hydraulikkammern 510, 511 sieht vor, dass mittels des erfindungsgemäßen Rückschlagventils die eine Hydraulikkammer 511 (als Hydraulikkammer der Gaskraftseite) mit der anderen Hydraulikkammer 510 (als Hydraulikkammer der Massenkraftseite) verbindbar ist und so die andere Hydraulikkammer 510 von der Hydraulikkammer 511 der Gaskraftseite gespeist wird.

## Patentansprüche

1. Pleuel (501) für eine Brennkraftmaschine mit variabler Verdichtung mit wenigstens einer Hydraulikkammer (510, 511), wobei die Hydraulikkammer (510, 511) mittels eines Rückschlagventils (1, 101, 301) mit einer Lagerschale (514) bzw. einem Versorgungsanschluss (P) des Pleuels bzw. einer weiteren Hydraulikkammer (511, 510) verbindbar ist, wobei das Rückschlagventil (1, 101, 301) einen Ventilkörper (3, 103, 303) mit einem Fluidpfad (4, 104, 304) aufweist, welcher mittels eines Schließelements (5, 105, 305) öffenbar und schließbar ist, **dadurch gekennzeichnet, dass** das Schließelement (5, 105, 305) als nach radial außen öffenbares Ringband vorgesehen ist und Enden des Ringbandes in der Einbaulage am Umfang des Ventilkörpers (3, 103, 303) zueinander weisend, angeordnet sind, wobei zur Lagesicherung des Ringbandes ein Bolzen (7, 107, 307) vorgesehen ist.

2. Pleuel (501) nach Anspruch 1, **dadurch gekennzeichnet, dass** radial nach außen gerichtete Vorsprünge (112, 113) in einer Längsrichtung (L) zu beiden Seiten des Schließelements (105, 305) zur Begrenzung einer axialen Bewegung des Schließelements (105, 305) vorgesehen sind.

3. Pleuel (501) nach einem der vorangegangenen Ansprüche 1 oder 2, **dadurch gekennzeichnet, dass** der Fluidpfad (304) zwei Teilpfade (324, 325) aufweist, welche mit einem oder mehreren Schließelementen (305) öffenbar und schließbar sind.

4. Pleuel (501) nach Anspruch 3, **dadurch gekennzeichnet, dass** die Schließelemente (305) unabhängig voneinander öffenbar und schließbar sind.

5. Pleuel (501) nach einem der vorangegangenen Ansprüche, **dadurch gekennzeichnet, dass** das Rückschlagventil (1, 101, 201, 301) in einen Pleuelkörper (22) des Pleuels eingeschraubt oder eingepresst vorgesehen ist.

6. Pleuel (501) nach Anspruch 5, **dadurch gekennzeichnet, dass** das Rückschlagventil (1, 101, 201, 301) unterhalb der Hydraulikkammer (510, 511) und/oder in einer Querbohrung (540, 541) des Pleuels angeordnet vorgesehen ist.

7. Pleuel (501) nach einem der Ansprüche 5 oder 6 mit zwei Hydraulikkammern (510, 511), **dadurch gekennzeichnet, dass** jeweils ein Rückschlagventil (1, 101, 201, 301) einer Hydraulikkammer (510, 511) zugeordnet ist.

8. Pleuel (501) nach einem der Ansprüche 5 oder 6 mit zwei Hydraulikkammern (510, 511), **dadurch gekennzeichnet, dass** ein einziges Rückschlagventil (301) für beide Hydraulikkammern (510, 511) vorgesehen ist, wobei der Fluidpfad (304) im Ventilkörper (303) Teilpfade (324, 325) aufweist, welche jeweils einer Hydraulikkammer (510, 511) zugeordnet sind.

## Claims

1. Connecting rod (501) for an internal combustion engine with variable compression, having at least one hydraulic chamber (510, 511), wherein the hydraulic chamber (510, 511) can be connected by means of a check valve (1, 101, 301) to a bearing shell (514) or a supply port (P) of the connecting rod or a further hydraulic chamber (511, 510), wherein the check valve (1, 101, 301) has a valve body (3, 103, 303) with a fluid path (4, 104, 304) which can be opened and closed by means of a closing element (5, 105, 305), **characterized in that** the closing element (5, 105, 305) is provided as a radially outwardly openable ring band and, in the installed position, ends of the ring band are arranged on the circumference of the valve body (3, 103, 303) so as to face one another, wherein a bolt (7, 107, 307) is provided for positionally securing the ring band.

2. Connecting rod (501) according to Claim 1, **characterized in that** radially outwardly directed projections (112, 113) are provided in a longitudinal direction (L) on both sides of the closing element (105, 305) to limit an axial movement of the closing element (105, 305).

3. Connecting rod (501) according to either of the preceding Claims 1 and 2, **characterized in that** the fluid path (304) has two subpaths (324, 325) which can be opened and closed by one or more closing elements (305).

4. Connecting rod (501) according to Claim 3, **characterized in that** the closing elements (305) can be opened and closed independently of one another.

5. Connecting rod (501) according to one of the preceding claims, **characterized in that** the check valve (1, 101, 201, 301) is provided screwed or pressed into a connecting rod body (22) of the connecting rod.

6. Connecting rod (501) according to Claim 5, **characterized in that** the check valve (1, 101, 201, 301) is provided arranged below the hydraulic chamber (510, 511) and/or in a transverse bore (540, 541) of the connecting rod.

7. Connecting rod (501) according to either of Claims 5 and 6 having two hydraulic chambers (510, 511), **characterized in that** in each case a check valve (1, 101, 201, 301) is assigned to a hydraulic chamber (510, 511).

8. Connecting rod (501) according to either of Claims 5 and 6 having two hydraulic chambers (510, 511), **characterized in that** a single check valve (301) is provided for both hydraulic chambers (510, 511), wherein the fluid path (304) in the valve body (303) has subpaths (324, 325) which are in each case assigned to a hydraulic chamber (510, 511) .

## Revendications

1. Bielle (501) destinée à un moteur à combustion interne à compression variable comprenant au moins une chambre hydraulique (510, 511), la chambre hydraulique (510, 511) pouvant être reliée au moyen d'une soupape anti-retour (1, 101, 301) à un coussinet (514) ou à un raccord d'alimentation (P) de la bielle ou d'une autre chambre hydraulique (511, 510), la soupape anti-retour (1, 101, 301) comportant un corps de soupape (3, 103, 303) pourvu d'un passage de fluide (4, 104, 304) qui peut être ouvert et fermé au moyen d'un élément de fermeture (5, 105, 305), **caractérisée en ce que** l'élément de fermeture (5, 105, 305) est prévu sous la forme d'une bande annulaire pouvant être ouverte radialement vers l'extérieur et **en ce que** des extrémités de la bande annulaire sont disposées de manière à pointer l'une vers l'autre en position installée sur la circonférence du corps de soupape (3, 103, 303), un goujon (7, 107, 307) étant prévu pour fixer la position de la bande annulaire.

2. Bielle (501) selon la revendication 1, **caractérisée en ce que** des saillies (112, 113) dirigées radialement vers l'extérieur sont prévues des deux côtés de l'élément de fermeture (105, 305) dans une direction longitudinale (L) pour limiter le mouvement axial des éléments de fermeture (105, 305).

3. Bielle (501) selon l'une des revendications précédentes 1 ou 2, **caractérisée en ce que** le chemin de fluide (304) comprend deux sous-chemins (324, 325) qui peuvent être ouverts et fermés avec au moins un élément de fermeture (305).

4. Bielle (501) selon la revendication 3, **caractérisée en ce que** les éléments de fermeture (305) peuvent être ouverts et fermés indépendamment les uns des autres.

5. Bielle (501) selon l'une des revendications précédentes, **caractérisée en ce que** la soupape anti-retour (1, 101, 201, 301) est vissée ou enfoncée dans un corps (22) de la bielle.

6. Bielle (501) selon la revendication 5, **caractérisée en ce que** la soupape anti-retour (1, 101, 201, 301) est disposée au-dessous de la chambre hydraulique (510, 511) et/ou dans un alésage transversal (540, 541) de la bielle.

7. Bielle (501) selon l'une des revendications 5 ou 6, pourvue de deux chambres hydrauliques (510, 511), **caractérisée en ce qu'**une soupape anti-retour (1, 101, 201, 301) est associée à chaque chambre hydraulique (510, 511).

8. Bielle (501) selon l'une des revendications 5 ou 6, pourvue de deux chambres hydrauliques (510, 511), **caractérisée en ce qu'**une seule soupape anti-retour (301) est prévue pour les deux chambres hydrauliques (510, 511), le passage de fluide (304) ménagé dans le corps de soupape (303) comportant des sous-chemins (324, 325) qui sont chacun associés à une chambre hydraulique (510, 511).
